# NEUE EUROPÄISCHE PATENTSCHRIFT

(11) **EP 2 483 178 B2**
(45) Veröffentlichungstag und Bekanntmachung des Hinweises auf die Entscheidung über den Einspruch: **10.04.2019**
(45) Hinweis auf die Patenterteilung: 26.06.2013
(21) Anmeldenummer: 10759865.8
(22) Anmeldetag: 24.09.2010
(51) Int. Cl.: B65G 1/137

(54) **VERFAHREN UND SYSTEM ZUM LAGERN UND KOMMISSIONIEREN VON ARTIKELN**
METHOD AND SYSTEM FOR STORING AND COMMISSIONING ARTICLES
PROCÉDÉ ET SYSTÈME POUR LE STOCKAGE ET LA PRÉPARATION DE COMMANDES D'ARTICLES

(30) Priorität: 28.09.2009 AT 15222009
(43) Veröffentlichungstag der Anmeldung: 08.08.2012
(73) Patentinhaber: Knapp AG, 8075 Hart bei Graz (AT)
(72) Erfinder: KOHOLKA, Roland, A-8502 Lannach (AT)
(74) Vertreter: Margotti, Herwig Franz
(86) Internationale Anmeldenummer: PCT/EP2010/064114
(87) Internationale Veröffentlichungsnummer: WO 2011/036238

(56) Entgegenhaltungen:
- WO-A2-2006/042347
- DE-A1-102007 034 705
- DE-C2- 4 332 315
- US-A1- 2005 043 850

## Beschreibung

Die Erfindung betrifft ein Verfahren zum Lagern und Kommissionieren von Artikeln, gemäß dem Oberbegriff des Anspruchs 1. Ein derartiges Verfahren ist aus der DE 43 32 315 C2 bekannt.

Sowohl im Versandhandel als auch im Großhandel, und vor allem im Pharmagroßhandel, ist es möglich, dass die Abnehmer Produkte gegen Kostenersatz zurückgeben können. Diese sogenannten Retouren können dem Lagerbestand zugeführt und wieder verkauft werden.

Das Problem bei den Retouren ist jedoch die geringe Stückzahl pro Produkt bzw. die Abwicklung des Rückgabevorgangs und die Tatsache, dass gleiche Produkte von verschiedenen Kunden retourniert werden können. Das bedeutet, dass sich eine Vielzahl von Wareneingangsvorgängen ergeben, die teilweise sogar auf den gleichen Lagerort mehrfach zugreifen.

Dieselbe Problematik besteht bei Produkten, die nur in so geringer Stückzahl benötigt werden, dass es sich nicht lohnt, dafür einen eigenen Lagerbestand zu halten. Ein typisches Beispiel für solche Produkte sind Zukaufartikel, wobei oftmals verschiedene Artikel gleichzeitig kommissioniert werden sollen, die aber vom Verkäufer nicht zugleich angeliefert werden und daher bis zum vollständigen Eingang aller Artikel zwischengelagert werden müssen.

Zulagerungen von Retouren, Zukaufsartikel, etc. sind sehr aufwändig, da in manuellen Lagern jeder Lagerort aufgesucht werden muss bzw. in automatischen Lagern jedes Behältnis mit den entsprechenden Produkten zu einem Arbeitsplatz gebracht werden muss.

Es gibt Ansätze, Retouren in eigenen Retourenlagern in Mischbehältern zu lagern und dadurch die Produkte einfach wieder dem Kommissionierablauf zuführen zu können. Ein auf diesem Prinzip basierendes Verfahren zum Verteilen von Retouren im Versandhandel ist aus dem Dokument DE 43 32 315 C2 bekannt.

Auch gibt es Vorrichtungen, in die Retouren einsortiert werden können und die in der Lage sind, die Produkte im Bedarfsfall einem Auftrag hinzuzufügen. Eine solche Vorrichtung ist in dem Dokument EP 0 982 241 B1 beschrieben. Die Nachteile dieser Art von Retourenmaschine sind einerseits deren geringe und beschränkte Kapazität und andererseits die hohen Kosten pro Lagerort, da eine Vereinzelungsvorrichtung im Wesentlichen jedem Lagerort zugeordnet ist.

Es ist daher eine Aufgabe der vorliegenden Erfindung, das Handhaben von retournierten Artikeln und anderen Artikeln, die keinen regulären Lagerbestand haben, effizienter als bisher zu gestalten und insbesondere die bisher bestehenden Nachteile bezüglich beschränkter Kapazität und/oder hoher Kosten pro Lagerort zu überwinden.

Diese Aufgabe wird durch ein Verfahren zum Lagern und Kommissionieren von Artikeln mit den Merkmalen des Anspruchs 1 gelöst. Vorteilhafte Ausgestaltungen der Erfindung sind in den Unteransprüchen dargelegt.

Das erfindungsgemäße Verfahren zum Lagern und Kommissionieren von Artikeln, umfasst: das Bereitstellen von Transportbehältern mit mehreren Abteilen,
das in chaotischer Anordnung Einlegen von Artikeln in in Abteile der Transportbehälter, wobei in jedes Abteil lediglich ein Artikel eingelegt wird;
das Verknüpfen eines jeden Artikels mit dem jeweiligen Transportbehälter und der Position des Abteils des Transportbehälters, in dem der Artikel eingelegt ist;
das Einlagern des Transportbehälters in ein Zwischenlager, beispielsweise ein Regallager, wobei vorzugsweise das Einlagern dann erfolgt, wenn alle Abteile des Transportbehälters mit Artikeln befüllt wurden;
bei Vorliegen eines Kommissionierauftrags das Prüfen mittels der Rechnereinrichtung, ob ein zu kommissionierender Artikel in einem Abteil eines im Zwischenlager befindlichen Transportbehälters enthalten ist und gegebenenfalls das Hinbewegen des Transportbehälters zu einer Kommissionierstation, das Entnehmen des Artikels aus seinem Abteil im Transportbehälter, das Übergeben des Artikels in einen dem Kommissionierauftrag zugeordneten Auftragsbehälter und das Rücktransportieren des Transportbehälters in das Zwischenlager, sofern er noch zumindest einen Artikel in einem seiner Abteile enthält.

Es sei erwähnt, dass der Begriff "Einlegen lediglich eines Artikels in ein Abteil" nicht notwendigerweise bedeutet, dass der Artikel nur ein einziges Stück umfasst. Der Begriff "Artikel", wie hierin verwendet ist so zu verstehen, dass es sich dabei um eine Einheit eines Produkts, z.B. eine Verkaufseinheit, oder ein Set bestehend aus mehreren Einzelteilen, wie z.B. eine Flasche einer Reinigungsflüssigkeit und eine Flasche einer Neutralisationsflüssigkeit für Kontaktlinsen, oder einen Bausatz oder dergleichen handelt. Allgemein kann man sagen, dass ein Artikel eine Einheit aus einem oder mehreren gemeinsam zu kommissionierenden Bestandteilen ist.

Das System zum Lagern und Kommissionieren von Artikeln, umfasst: zumindest eine Bearbeitungsstation für Artikel und zumindest eine Kommissionierstation für das Kommissionieren von Artikeln,
ein Zwischenlager, beispielsweise ein Regallager;
Transportbehälter die jeweils mehere Abteile aufweisen, wobei jedes Abteil lediglich für die Aufnahme eines Artikels vorgesehen ist;
eine Fördertechnik, mit der die Transportbehälter vom Zwischenlager zur Kommissionierstation und wieder zurück in das Zwischenlager bringbar sind;
eine Rechnereinrichtung zur Steuerung des Transports der Transportbehälter;
wobei an der Bearbeitungsstation die Artikel in chaotischer Anordnung in Abteile der Transportbehälter einlegbar sind und mittels der Rechnereinrichtung ein jeder Artikel mit dem jeweiligen Transportbehälter und der Position des Abteils des Transportbehälters, in dem der Artikel eingelegt ist, verknüpfbar ist;
wobei die Transportbehälter nach dem Einlegen von Artikeln in das Zwischenlager einlagerbar sind und die Rechnereinrichtung bei Vorliegen eines Kommissionierauftrags prüft, ob ein zu kommissionierender Artikel in einem Abteil eines im Zwischenlager befindlichen Transportbehälters enthalten ist und gegebenenfalls das Hinbewegen dieses Transportbehälters zur Kommissionierstation veranlasst, an der eine Entnahmevorrichtung zum Entnehmen des Artikels aus seinem Abteil im Transportbehälter und zum Übergeben des Artikels in einen dem Kommissionierauftrag zugeordneten Auftragsbehälter ausgebildet ist, wobei der Transportbehälter nach der Entnahme des Artikels in das Zwischenlager zurücktransportierbar ist, sofern er noch zumindest einen Artikel enthält.

Bei der Zulagerung von Retouren zu einem bereits lagernden Bestand ist auch zu beachten, dass Retouren im Allgemeinen eine kürzere Resthaltbarkeit haben als die noch nie ausgelieferten gleichartigen Produkte. Um bei den Kommissioniervorgängen sicher zu stellen, dass immer die ältesten Produkte gewählt (FIFO-Prinzip) werden, bedarf es organisatorischer Maßnahmen, welche aber nicht die Kommissionierleistung reduzieren sollen. Zur Lösung dieses Problems sieht die Erfindung vor, dass die Artikel von der Rechnereinrichtung mit ihren Ablaufdaten verknüpft werden und bei einem Kommissionierauftrag jener Artikel mit dem frühesten Ablaufdatum zuerst kommissioniert wird.

In einer vorteilhaften Ausgestaltung der Erfindung ist vorgesehen, dass Artikel aus einem Transportbehälter in einen anderen Transportbehälter verlagert werden, wobei die Rechnereinrichtung eine Aktualisierung der Verknüpfung der Artikel mit den neuen Transportbehältern und gegebenenfalls den Positionen der Abteile, in die die Artikel verlagert wurden, vornimmt. Vorzugsweise findet das Verlagern direkt an einer Kommissionierstation statt. Zur Verlagerung der Artikel ist eine Sortiereinrichtung vorgesehen, wobei zur Verringerung der Anzahl an Bauteilen die Sortiereinrichtung in die Entnahmeeinrichtung integriert ist bzw. die Funktion einer Sortiereinrichtung von der Entnahmeeinrichtung ausgeführt wird. Durch diese Maßnahmen wird eine Konsolidierung des Inhalts der Transportbehälter erreicht, so dass sich auch bei einem sehr hohen Füllgrad des Gesamtsystems vollständig leere Transportbehälter erzeugen lassen und nicht teilbefüllte Transportbehälter zur Bearbeitungsstation für einzulagernde Artikel geschickt werden müssen.

Der Transport der Transportbehälter zu den Bearbeitungsstationen bzw. von den Bearbeitungsstationen in das Zwischenlager kann manuell erfolgen. In einer Variante der vorliegenden Erfindung ist dafür jedoch eine Fördertechnik vorgesehen, um das Personal zu entlasten.

In einer Ausführungsform des Systems werden die Abteile eines jeden Transportbehälters von Abteilbehältern gebildet. In diesem Fall ist die Entnahmevorrichtung dazu ausgebildet, die Abteilbehälter aus den Transportbehältern zu entnehmen, zur Entnahme des darin gelagerten Artikels an einer Abgabeposition zu positionieren und zu entleeren, insbesondere durch Drehen des Abteilbehälters. Der Vorteil dieser Ausführungsform liegt darin, dass die Entnahmevorrichtung nicht unmittelbar mit den Artikeln in Berührung kommt, die verschiedenartigste Gestalten haben können, sondern für die Handhabung standardisierter Abteilbehälter ausgelegt werden kann. Ein weiterer Vorteil dieser Ausführungsform ist, dass mit Hilfe einer Sortiereinrichtung bzw. einer Entnahmevorrichtung mit Sortierfunktion die Abteilbehälter von einem Transportbehälter in einen anderen Transportbehälter verlagert werden können. Damit wird die oben erwähnte Konsolidierung des Befüllungsgrads der Transportbehälter erzielt, ohne dass die Sortiereinrichtung unmittelbar mit den zu verlagernden Artikeln in Berührung kommen muss.

In einer soliden und handhabungssicheren Ausführungsform umfasst die Entnahmevorrichtung Saug- oder Zangengreifer zum Ergreifen der Abteilbehälter.

Um das Ergreifen der Abteilbehälter, insbesondere wenn diese Seite an Seite im Transportbehälter angeordnet sind, zu erleichtern, ist in einer Variante der Erfindung vorgesehen, dass im Boden des Transportbehälters unter jedem Abteilbehälter ein Loch ausgebildet ist, durch das eine Hebeeinrichtung durchführbar ist. Die Anordnung von Abteilbehältern Seite an Seite ist insofern vorteilhaft, als sie eine optimale Nutzung des Platzes im Transportbehälter gewährleistet.

Um eine möglichst universelle Lagerung und Kommissionierung unterschiedlich großer Artikel zu erlauben, können unterschiedlich dimensionierte Abteilbehälter vorgesehen werden. Dadurch kann das Lagervolumen stets den jeweiligen Notwendigkeiten der Artikel angepasst werden.

In einer alternativen Ausführungsform weisen die Abteile der Transportbehälter klappbare Böden auf. Bei dieser Ausführungsform sind keine separaten Abteilbehälter vorgesehen. Zum Kommissionieren wird der Transportbehälter über dem Auftragsbehälter oder über einer zum Auftragsbehälter führenden Rutsche platziert und der Boden ausgeklappt, so dass der darin befindliche Artikel in den Auftragsbehälter bzw. auf die Rutsche fallen kann.

In einer weiteren Variante umfasst der Transportbehälter Abteilbehälter, die so gelagert sind, dass zumindest ein Teil des Bodens der Abteilbehälter frei zugänglich im Transportbehälter liegt. Dazu ist beispielsweise der Transportbehälter in Form eines Rahmens bereitgestellt. Der Boden der Abteilbehälter ist aufklappbar, um die darin gelagerten Artikel durch den geöffneten Boden hindurch an einen Auftragsbehälter oder eine Rutsche zu einem Auftragsbehälter abgeben zu können.

Die Erfindung wird nun anhand von Ausführungsbeispielen unter Bezugnahme auf die Zeichnungen näher erläutert. In den Figuren zeigen:
Fig. 1 schematisch ein System zum Lagern und Kommissionieren von Artikeln;
Fig. 2 eine Draufsicht einer ersten Ausführungsform eines bei der Erfindung verwendeten Transportbehälters;
Fig. 3 eine schematische Ansicht einer bei der Erfindung verwendeten Kommissionierstation;
Fig. 4 eine Draufsicht einer zweiten Ausführungsform eines bei der Erfindung verwendeten Transportbehälters; und
Fig. 5 eine schematische Ansicht einer weiteren Ausführungsform einer bei der Erfindung verwendeten Kommissionierstation.

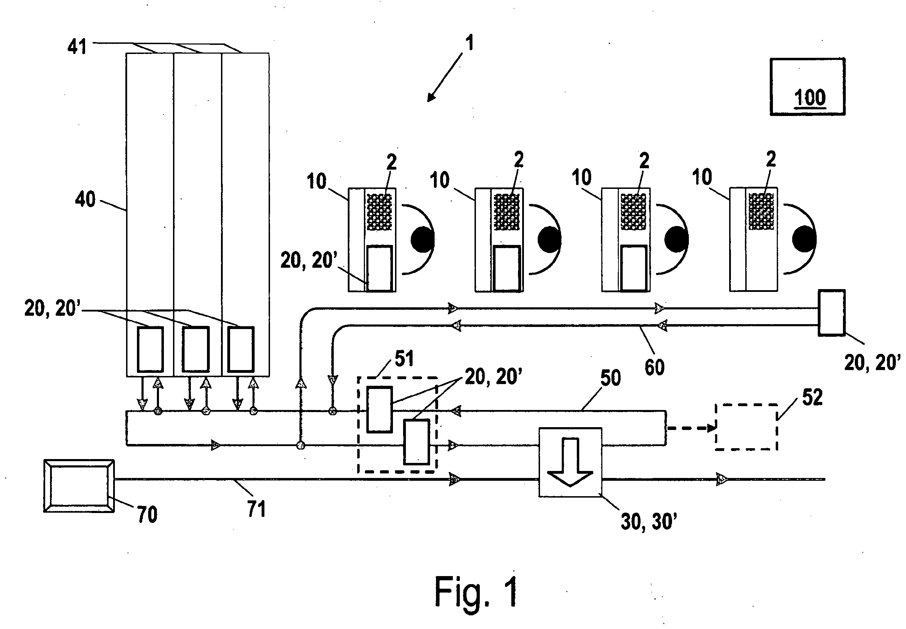

Fig. 1 zeigt schematisch ein System 1 zum Lagern und Kommissionieren von Artikeln 2. Beispielsweise handelt es sich bei diesen Artikeln um Produkte des Versandhandels oder Großhandels, die von den Händlern an den Hersteller oder einen Lieferanten gegen Kostenersatz zurückgegeben werden können. Solche retournierten Artikel werden auch als Retouren bezeichnet, und es ist das Ziel diese Retouren dem Lagerstand des Herstellers oder Lieferanten möglichst schnell zuzuführen und anschließend wieder zu verkaufen. Zusätzlich zu oder anstelle von Retouren können diese Artikel 2 auch Zukaufsartikel bzw. allgemein Artikel, die in zu geringer Zahl für die Anlage eines separaten Lagerbestandes benötigt werden, umfassen. Das System 1 weist eine oder - wie hier dargestellt - mehrere Bearbeitungsstationen 10 für Artikel 2 auf. An diesen Bearbeitungsstationen 10 erfolgt durch Angestellte eine Überprüfung, ob die Artikel 2 für eine spätere Kommissionierung geeignet sind, z.B. für den Wiederverkauf, wenn es sich um retournierte Artikel handelt. Ist dies der Fall, so werden die Artikel 2 in Transportbehälter 20, 20' eingelegt.

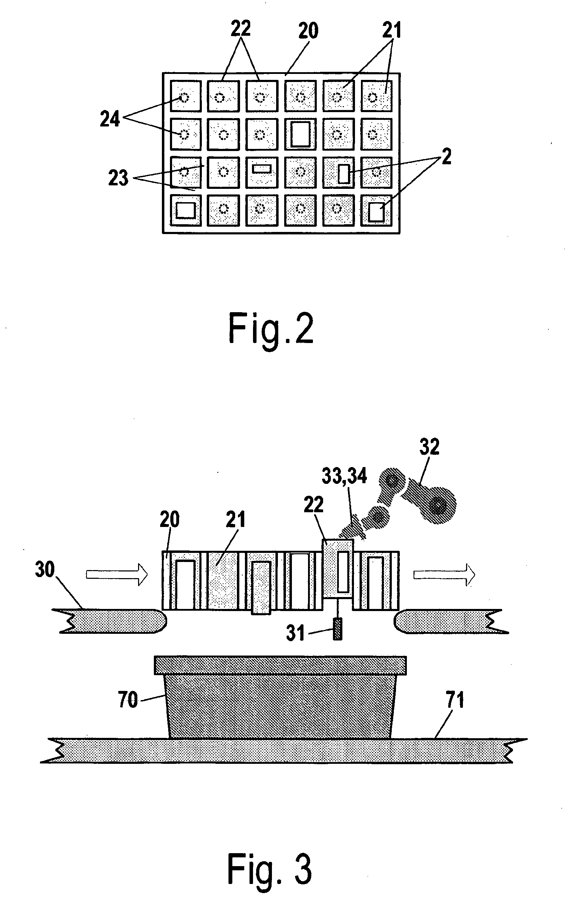

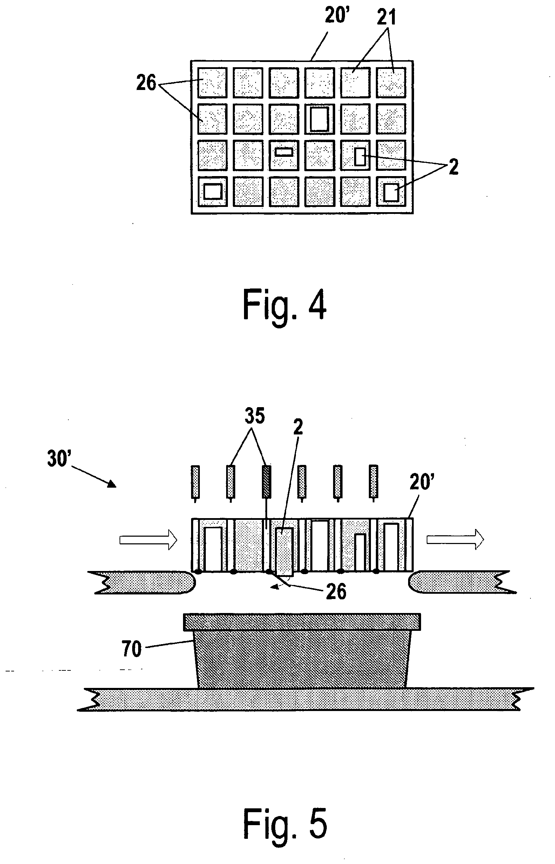

In den Figuren 2 und 4 sind jeweils in Draufsicht zwei verschiedene Ausführungsformen der Transportbehälter 20, 20' dargestellt. Beiden Ausführungsformen an Transportbehältern 20, 20' ist gemeinsam, dass sie jeweils zumindest ein Abteil 21 aufweisen (in den dargestellten Ausführungsbeispielen jeweils vierundzwanzig Abteile in einer Anordnung von sechs Spalten und vier Zeilen) und dass jedes Abteil 21 dazu ausgebildet ist, einen einzigen Artikel aufzunehmen. Wie bereits oben erwähnt, kann ein Artikel 2 jedoch aus mehreren Einzelteilen bestehen. Der genaue Aufbau der Transportbehälter 20, 20' wird weiter unten näher erläutert.

Weiters umfasst das System 1 zumindest eine Kommissionierstation 30, 30' für das Kommissionieren von Artikeln 2 sowie ein Zwischenlager 40, beispielsweise ein Regallager, in dem die mit Artikeln 2 befüllten Transportbehälter 20, 20' gelagert werden. In diesem Ausführungsbeispiel ist das Zwischenlager 40 als ein automatisches Kleinteilelager in der Konfiguration eines "Order Storage and Retrieval"-Systems, kurz OSR-Systems ausgebildet. Ein OSR-System ist ein Lagersystem, bei dem voneinander entkoppelte Regalbediengeräte (Shuttles) und ein vertikaler Lift (beide nicht in der Zeichnung dargestellt) die Transportbehälter 20, 20' aus einem Regal 41 zu einer Fördertechnik 50 bringen, auf der sie dann zur Kommissionierstation 30 transportiert werden. Ebenso dient die Fördertechnik 50 dazu, die Transportbehälter 20, 20' nach dem Kommissionieren von darin befindlichen Artikeln 2 von der Kommissionierstation 30 zum Zwischenlager 40 zurückzubringen (sofern die Transportbehälter 20, 20' noch nicht leer sind). Sollten die Transportbehälter 20, 20' an der Kommissionierstation 30 geleert werden, so werden die Transportbehälter 20, 20' zweckmäßigerweise an einen Transportbehälter-Sammelplatz 52 bewegt, von wo sie bei Bedarf zu den Bearbeitungsstationen 10 gebracht werden können. Diese Sammelplätze können sich auch unmittelbar bei den Bearbeitungsstationen 10 befinden.

Eine schematisch dargestellte Rechnereinrichtung 100 dient unter anderem zur Steuerung des Transports der Transportbehälter 20, 20' im System 1. Bei der Rechnereinrichtung 100 kann es sich um einen zentralen Rechner oder um ein verteiltes Rechnersystem handeln. Die Rechnereinrichtung 100 ist über ein nicht dargestelltes, in der Industrie an sich bekanntes Netzwerk an alle relevanten Einrichtungen des Systems 1 angeschlossen.

Wie bereits oben erwähnt legen die Angestellten an den Bearbeitungsstationen 10 die Artikel 2 in beliebiger (chaotischer) Anordnung in Abteile 21 der Transportbehälter 20, 20' ein. Die Rechnereinrichtung 100 verknüpft einen jeden der eingelegten Artikel 2 mit dem jeweiligen Transportbehälter 20, 20' und gegebenenfalls der Position des Abteils 21 des Transportbehälters 20, 20', in dem der Artikel 2 eingelegt ist. Nach dem Einlegen von Artikeln 2 in den Transportbehälter 20, 20' wird dieser von der Bearbeitungsstation 10 in das Zwischenlager 40 transportiert und dort eingelagert. Dies kann händisch erfolgen, in der vorliegenden Ausführungsform ist jedoch eine eigene Fördertechnik 60 vorgesehen, mit der die Transportbehälter 20, 20' zu und von den Bearbeitungsstationen weg bringbar und in das Zwischenlager 40 einschleusbar sind.

tragsbehälter 70 ausgebildet. Die Auftragsbehälter 70 werden über eine eigene Fördertechnik 71 zur Kommissionierstation 30, 30' und von ihr weg befördert.

Damit bei Retouren immer zuerst die ältesten Produkte bei der Kommissionierung gewählt werden (FIFO-Prinzip), kann die Rechnereinrichtung 100 die Artikel zusätzlich mit ihren Ablaufdaten verknüpfen und bei einem Kommissionierauftrag jenen Artikel 2 mit dem frühesten Ablaufdatum zuerst kommissionieren.

Aus den Figuren 2 und 3 ist ersichtlich, dass bei der ersten Ausführungsform des Transportbehälters 20 die Abteile 21 eines jeden Transportbehälters 20 von Abteilbehältern 22 gebildet werden. Die Abteilbehälter 22 sind durch im Transportbehälter 20 ausgebildete Stege 23 voneinander getrennt, können zur Optimierung des Platzverbrauchs aber auch unmittelbar Seite an Seite angeordnet werden. Speziell für den Fall einer Seite an Seite Anordnung der Abteilbehälter 22 hat es sich als günstig erwiesen, wenn im Boden des Transportbehälters 20 Löcher 24 ausgebildet sind, durch die eine Hebeeinrichtung 31, wie z.B. ein motorisch betätigter Stab hindurch führbar ist. Durch das Anheben eines Abteilbehälters 22, der einen zu kommissionierenden Artikel 2 enthält, kann die Entnahmevorrichtung 32 diesen Abteilbehälter 22 leichter aus dem Transportbehälter 20 entnehmen und den darin gelagerten Artikel 2 z.B. durch Drehen des Abteilbehälters 22 in den in einer Abgabeposition darunter befmdlichen Auftragsbehälter 70 leeren. Anschließend wird der leere Abteilbehälter 22 wieder in den Transportbehälter 20 zurückgestellt. Die Entnahmevorrichtung 32 ist mit Sauggreifern 33 und/oder Zangengreifern 34 versehen.

Obwohl in der Zeichnung alle Abteilbehälter 22 gleich groß dargestellt sind, können gemäß der Erfmdung auch unterschiedlich dimensionierte Abteilbehälter vorgesehen werden.

Aus den Figuren 4 und 5 ist ersichtlich, dass bei der zweiten Ausführungsform des Transportbehälters 20' die Abteile 21 eines jeden Transportbehälters 20' klappbare Böden 26 aufweisen. Die Entnahmevorrichtung 35 an der Kommissionierstation 30' umfasst in diesem Fall Aktuatoren zum Öffnen der Böden 26, so dass ein darin befindlicher Artikel 2 direkt in den darunter befindlichen Auftragsbehälter 70 fallen kann. In Variation der beiden dargelegten Prinzipien von Transportbehältern 20, 20' könnte man auch eine Mischform realisieren, bei der die Abteile eines jeden Transportbehälters von Abteilbehältern gebildet werden, die so im Transportbehälter gelagert sind, dass zumindest ein Teil des Bodens der Abteilbehälter frei zugänglich ist, und dass die Böden der Abteilbehälter klappbar sind.

Es kann weiters eine in Fig. 1 schematisch dargestellte Sortiereinrichtung 51 vorgesehen werden, mittels der Artikel 2 aus einem Transportbehälter 20, 20' in einen anderen Transportbehälter 20, 20' verlagerbar sind, wobei die Rechnereinrichtung 100 die Verknüpfung der Artikel 2 mit den neuen Transportbehältern 20, 20' und gegebenenfalls den Positionen der Abteile 21, in die die Artikel verlagert wurden, aktualisiert. Vorzugsweise ist die Sortiereinrichtung 51 in eine Kommissionierstation 30, 30' integriert, wobei die Funktion des Sortierens z.B. von der Entnahmeeinrichtung 32 (siehe Fig. 3) erfüllt werden kann. Sofern die Transportbehälter 20 mit separaten Abteilbehältern 22 verwendet werden, kann das Verlagern der Artikel 2 aus einem Transportbehälter 20 in einen anderen Transportbehälter 20 mittels Verlagern der Abteilbehälter 22, in denen sich die Artikel befinden, erfolgen.

## Patentansprüche

1. Verfahren zum Lagern und Kommissionieren von Artikeln (2), umfassend:
das Bereitstellen von Transportbehältern mit mehreren Abteilen (21);
das in chaotischer Anordnung Einlegen von Artikeln (2) in Abteile der Transportbehälter (20, 20');
das Verknüpfen eines jeden Artikels (2) mit dem jeweiligen Transportbehälter (20, 20') und der Position des Abteils (21) des Transportbehälters, in dem der Artikel eingelegt ist, mittels einer Rechnereinrichtung (100);
das Einlagern des Transportbehälters in ein Zwischenlager (40), beispielsweise ein Regallager, wobei vorzugsweise das Einlagern dann erfolgt, wenn alle Abteile des Transportbehälters mit Artikeln befüllt wurden;
bei Vorliegen eines Kommissionierauftrags das Prüfen mittels der Rechnereinrichtung (100), ob ein zu kommissionierender Artikel (2) in einem Abteil (21) eines im Zwischenlager (40) befindlichen Transportbehälters (20, 20') enthalten ist und gegebenenfalls das Entnehmen des Artikels aus seinem Abteil im Transportbehälter,
**dadurch gekennzeichnet, dass**:
in jedes Abteil (21) der Transportbehälter (20, 20') lediglich ein Artikel (2) eingelegt wird;
zum Entnehmen des Artikels aus seinem Abteil im Transportbehälter der Transportbehälter zu einer Kommissionierstation (30, 30') hinbewegt wird, an der der Artikel in einen dem Kommissionierauftrag zugeordneten Auftragsbehälter (70) übergeben wird; und
der Transportbehälter in das Zwischenlager rücktransportiert wird, sofern er noch zumindest einen Artikel in einem seiner Abteile enthält.

2. Verfahren nach Anspruch 1, **dadurch gekennzeichnet, dass** die Artikel (2) von der Rechnereinrichtung (100) mit ihren Ablaufdaten verknüpft werden und bei einem Kommissionierauftrag jener Artikel mit dem frühesten Ablaufdatum zuerst kommissioniert wird.

3. Verfahren nach Anspruch 1 oder 2, **gekennzeichnet durch** das Verlagern von Artikeln aus einem Transportbehälter (20, 20') in einen anderen Transportbehälter (20, 20') unter Aktualisierung der Verknüpfung der Artikel mit den neuen Transportbehältern und gegebenenfalls den Positionen der Abteile, in die die Artikel verlagert wurden, wobei das Verlagern vorzugsweise an einer Kommissionierstation (30, 30') stattfindet.

## Claims

1. A method for storing and commissioning articles (2), comprising:
providing transport containers having several compartments (21);
introducing articles (2) in a chaotic order in compartments (21) of the transport containers (20, 20');
associating every article (2) with the respective transport container (20, 20') and with the position of the compartment (21) of the transport container, in which the article is introduced, by means of a computer device (100);
storing of the transport container in an intermediate storage (40), for example, a shelf storage, wherein the storing is preferably performed, when all compartments of the transport container have been filled with articles;
upon provision of a commissioning order, checking by means of the computer device (100), whether an article (2) to be commissioned is contained in a compartment (21) of a transport container (20, 20') located in the intermediate storage (40) and optionally retrieving the article from its compartment in the transport container,
**characterized by**:
wherein in each compartment (21) there is introduced only one article (2);
moving the transport container to a commissioning station (30, 30') for retrieving the article from its compartment (21) and transferring the article into an order container (70) assigned to the commissioning order and transporting the transport container back into the intermediate storage, if it still contains at least one article in one of its compartments.

2. A method according to claim 1, **characterized in that** the articles (2) are associated by the computer device (100) with their process data and that for a commissioning order those articles with the earliest expiry date are commissioned first.

3. A method according to claim 1 or 2, **characterized by** the moving of articles from a transport container (20, 20') into another transport container (20, 20'), while updating the association of the articles with the new transport containers and optionally with positions of the compartments, in which the articles have been stored, wherein the moving is preferably performed at a commissioning station (30, 30').

## Revendications

1. Procédé pour le stockage et la préparation de commande d'articles (2) comprenant :
la mise en place de conteneurs de transport comprenant plusieurs compartiments (21) ;
l'introduction, dans un arrangement chaotique, d'articles (2) dans des compartiments des conteneurs de transport (20 ; 20') ;
la mise en relation de chaque article (2) avec le conteneur de transport (20, 20') correspondant et avec la position du compartiment (21) du conteneur de transport dans lequel l'article est introduit au moyen d'un dispositif de calcul (100) ;
le stockage du conteneur de transport dans un lieu de stockage provisoire (40), par exemple, un lieu de stockage par rayonnages, où de préférence, le stockage a lieu lorsque tous les compartiments du conteneur de transport sont remplis d'articles ;
le contrôle, lorsqu'une commande de préparation est présente, au moyen du dispositif de calcul (100), qu'un article (2) à préparer est bien contenu dans un compartiment (21) d'un conteneur de transport (20, 20') se trouvant dans le lieu de stockage provisoire (40), et éventuellement, le prélèvement de l'article de son compartiment dans le conteneur de transport,
**caractérisé en ce que** :
un article (2) est purement et simplement disposé dans chaque compartiment (21) du conteneur de transport (20, 20') ;
le conteneur de transport est déplacé vers une station de préparation de commandes (30, 30') pour le prélèvement de l'article de son compartiment dans le conteneur de transport, station où l'article est transmis dans un conteneur pour la commande (70) attribué à la commande à préparer ; et
le conteneur est de nouveau transporté dans le lieu de stockage provisoire tant qu'il contient encore au moins un article dans l'un de ses compartiments.

2. Procédé selon la revendication 1 **caractérisé en ce que** les articles (2) sont mis en relation avec les dates des départs par le dispositif de calcul (100) et qu'une commande d'une préparation d'articles avec la date de départ la plus proche est préparée en premier lieu.

3. Procédé selon les revendications 1 ou 2 **caractérisé par** le déplacement d'articles d'un conteneur de transport (20, 20') dans un autre conteneur de transport (20, 20'), moyennant une actualisation de la mise en relation des articles avec les nouveaux conteneurs de transport et éventuellement, avec les positions des compartiments dans lesquels les articles ont été stockés, le déplacement ayant de préférence lieu dans une station de préparation de commande (30, 30').
